# EUROPEAN PATENT SPECIFICATION

(11) **EP 1 584 898 B1**
(45) Date of publication and mention of the grant of the patent: **27.08.2008**
(21) Application number: 04300198.1
(22) Date of filing: 08.04.2004
(51) Int. Cl.: G01D 4/00

(54) **Method and system for remotely monitoring meters**
Verfahren und Vorrichtung zur entfernten Überwachung eines Messgerät
Méthode et dispositif pour relever à distance la valeur indiquée par un instrument de mesure

(43) Date of publication of application: 12.10.2005
(73) Proprietor: Accenture Global Services GmbH, 8200 Schaffhausen (CH)
(72) Inventor: Cameron, Richard Neill, 06650 France (FR)
(74) Representative: de Beaumont, Michel

(56) References cited:
- DE-A- 19 962 954
- US-A1- 2004 032 504
- US-B1- 6 522 889

## Description

### FIELD OF THE INVENTION

The present invention relates to a system and method for remotely monitoring meters and other alphanumerical displays.

The present invention applies, more particularly to utility meters (electricity, water, gas, etc.), odometers (of a car, truck, etc.) or industrial meters (tank levels, etc.).

### BACKGROUND OF THE INVENTION

The most usual solution for monitoring meters, especially utility meters, is to perform a manual reading of the meter digits or other indication means (dials, needles, bars) and to enter the read value in a computerized system for further processing (statistic, invoicing, etc.). The monitoring is made either by a professional or by the user of the service. In the later case, problems of fraud in communicating false or inadvertently incorrect values may arise.

Automatic remote monitoring systems also exist. Such systems require specific equipments on the meter side, and particularly special network conditioning and/or elements. For example, electricity utility meters are provided with transmission means, like modems, to communicate with a central server periodically collecting the values of the meters. Such remote automatic monitoring systems alleviate the drawbacks of writing (voluntarily or not) mistakes. However, it requires specific costly equipments on the meter side and does not enjoy widespread deployment in the world. Hence, remote automated meter reading is not applicable to non-equipped, legacy, non-electronic, or non-fitted meters which represent a large majority of the installed meter base (for example, old utility meters dedicated to manual information collection).

An additional problem is that, in most applications, the value of the meter has to be checked as the right one for a specific customer, for example as being the meter of the right house. This implies extra time spent for a specific manual check and verification looking for an identifier and an associated street or living quarter address.

The document US 2004 032504 discloses a method for monitoring a utility meter in which a camera is used to take a digital picture of the meter.

The present invention aims at providing a method and system for remotely monitoring meters which alleviate drawbacks of the known manual solutions.

More particularly, a purpose of the present invention is a method and system which does not require modification (especially adding communication functions) of existing meters or networks.

Another purpose of the present invention is for it to be adapted and used as well for digital (indicating alphanumeric digits) or analog (dials, needles or bars) meters.

Another purpose of the present invention is to be adapted to an automatic processing of associating the collected values to a specific customer or entity.

Another purpose of the present invention is to improve the reliability of the monitoring in order to limit frauds, and to improve business efficiencies by changing the process of how a remote meter read could be achieved.

### SUMMARY OF THE INVENTION

To attain these purposes and others, the present invention provides a method and system in which the information displayed by the meter is photographed to be transmitted to a remote computerized system for processing the picture and the remote computerized system for processing the picture and the corresponding value(s). Further, the meter is identified by the geographical localization of the camera at the time the picture of the meter is taken.

According to a first aspect of the present invention, there is provided a method for remote monitoring of a current value displayed by a display of a meter comprising the step of taking a picture of said display with a camera equipping a portable communication device, the method characterized by the steps of sending the picture through a communication network associated with the portable communication device to a server, collecting and storing at least the picture in a remote computerized datastore communicating with the server, deducing from received or derived localization data a geographical area of the portable communication device, and checking the location of the portable communications device and identifying it.

Preferably, the present invention uses the media capabilities of recent mobile communication devices, especially of mobile phones. Mobile phones are now equipped with cameras available for taking at least fixed pictures and for transmitting these pictures through a Multimedia Messaging Service (MMS) of the communication network. Further, the resolution of these mobile phone cameras is sufficient for the invention purpose.

According to the present invention, such a system is used for sending at least one picture of one or several displays of a meter to be monitored. Then, the picture is received by a central processing server for interpretation. The server implements conventional image processing methods. For example, one could refer to the following references:
"Locating and Recognizing Text in WWW Images", from Lopresti Daniel, Jiangying Zhou, Information Retrieval, v. 2 n. 2-3, pp. 177-206, May 2000;
"Foreground/background segmentation of color images by interaction of multiple cues" from Huang Q, Dom B, Steele D, Ashley J and Niblack W, Proceedings of the Conference on Computer Vision and Pattern Recognition, pp. 246-249 (1995);
"N-Tuple features for OCR revisited" from Jung D, Krishnamoorthy M, Nagy G, and Shapira A, IEEE Transactions on Pattern Analysis and Machine Intelligence (1996); and
"Robust retrieval of noisy text" from Lopresti D, Proceedings of the Third Forum on Research and Advances in Digital Libraries, Washington, DC, pp. 76-85 (1996).

These and other known methods applied for converting the picture of the display (digits of a counter, needles of dials, bars, etc.) into a digital interpretable value representing the value indicated by the display.

According to the invention, the system utilized in taking the picture of the meter is automatically identified by a geographical localization process. This geographical localization process can use one of many emerging localization techniques for mobile devices. Some of the leading methods are assisted GPS (aGPS) which utilizes a low-signal hybrid approach between GPS satellites and the core wireless network. Time differential of arrival (TDOA) techniques or other similar signal and strength analysis approaches combine to localize a phone down to meters of accuracy. Alternatively, a non-core network localization technique could be applied such as utilizing a Bluetooth GPS receiver to give the exact location and time to the mobile phone as it is about to send the MMS picture to the backend.

Hence, instead of attempting to localize the meter, the invention localizes the mobile phone, i.e. the camera. Such localization has the precision of whichever technique is available for use within the national wireless carrier's network - or that technique which is deployed in the case of the standalone Bluetooth GPS receivers.

In a simplified embodiment, determining the aGPS location or even the cell identifier is sufficient to properly localize a meter with respect to the distance separating two meters to be monitored. In a preferred embodiment, the cell identifier localization is completed by the identification of the mobile phone sending the picture utilizing the phone number and the 15 digit IMEI number and potentially complimented with another picture of the sender, finger or voice biometrics minutia, PIN code or other identifier. Such identification is checked in a list of authorized senders for the given meter. Additionally, facial biometrics could be applied if accompanying sender's picture is sent to validate the customer. Such identification can also serve for authentication purposes of the sender, and meta-data extraction such as damage or other such visually determinable characteristics could be historically recognized, trended, and acted on. Additionally, association of the correct car model dashboard or the correct meter type for the customer could be mined and validated historically to verify that a customer is sending his own information.

According to a first application domain (utility or industrial meters), the meter is at a fixed location. This location is pre-stored in the server typically as in a customer datastore. The solution includes a reverse geocode lookup to translate the geographical latitude and longitude into a near match street address or address range which is then compared via business logic to existing customer addresses in a customer datastore or other such storage mechanism of the meter address. Thus, the automatic association of the extracted meter displayed value information to the customer record that is the closest match is possible.

According to a second application domain (for example, odometers), the meter is mobile. Both the meter to be monitored and the communicating device are mobile. Hence, there is an additional problem for identifying the meter. According to an embodiment, in which the meter can be localizable (for example, through a GPS installed in the vehicle), the two localizations (of the mobile phone and of the meter) are compared. According to another embodiment, in which the meter is not localizable alone, at least one fixed location (for example, the garage of the owner of the vehicle) is associated to the meter in a backend system - and the picture is taken into account only if taken by the mobile device when the meter is at this known location or location geofenced area.

### BRIEF DESCRIPTION OF THE DRAWINGS

The foregoing and others purposes, features, aspects and advantages of the invention will become apparent from the following detailed description of embodiments, given by way of illustration and not limitation with reference to the accompanying drawings.
Figure 1 schematically illustrates a first embodiment of the present invention; and
Figure 2 schematically illustrates a second embodiment of the present invention.

### DETAILED DESCRIPTION OF THE INVENTION

The same elements have been designated by the same labels in the drawings. For clarity reasons, only the steps and elements useful for the understanding of the invention have been shown in the drawings and will be disclosed hereafter. Especially, the constitution of a meter has not been detailed, the invention being adapted to any conventional meter or alphanumeric display - provided that it comprises a display (digital or analog) displaying the required value(s). Further, the destination of the value obtained by the invention has not been detailed, the invention being compatible with any conventional system of processing meter values and with any downstream application.

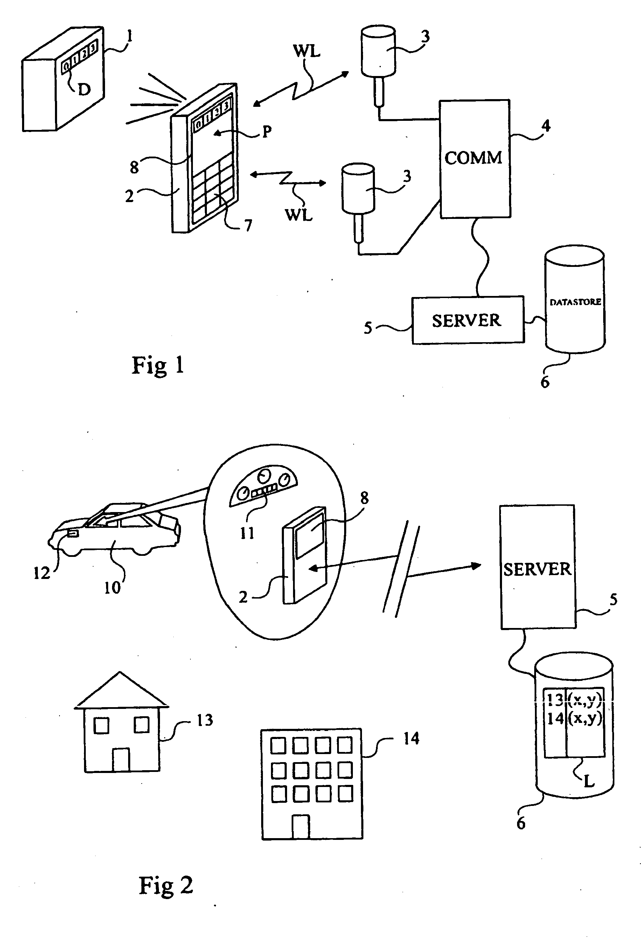

Figure 1 illustrates, very schematically, an embodiment of the present invention applied to utility meters like gas or electricity meters.

The first step of the method according to this example is to take a picture P of a display D of a meter 1 (here a decimal counter) with a mobile phone 2 or any communicating device equipped with a camera using a communication network of the cellular 2G, 2.5G, 3G, or 4G packet or circuit switched type.

Immediately (more generally, while the mobile phone is still in the vicinity of the meter), the user creates a media message MMS and sends it to the gas or electricity provider. When creating the MMS, the user can check the picture P appearing on the display 8 of the phone.

The MMS image transfer is made through wireless links WL to access point(s) 3 of the communication network. Each access point (or base station) defines a communication cell and a geographical area covered by the Radio Frequency (RF) field radiated by the antenna. The access points relay the communication to a communication unit 4 (COMM), itself linked (wireless or not) to an application server 5 (SERVER) which hosts the MMS processing.

The MMS total message packet preferably comprises not only the picture but also the identification of the sender's phone number and the 15 digit IMEI number and potentially complimented with another picture of the sender; other identifiers; numeric data typed on the keypad of the phone that should match the meter information; other attachment formatted data such as voice; current cell id; or other such complimentary application data. Further, a communication cell identification from which the phone is currently using could be transmitted from the communication service provider (symbolized by the communication unit (4) - or potentially other such communication network elements - to the server 5. Alternatively, the communication service provider provides directly a geographical approximate localization of the mobile phone 2 when sending the MMS using aGPS or other such methods, or the user application gets the location data from another nearby GPS or location device (such as the Bluetooth GPS receivers previously described).

The server 5 (symbolizing the computerized system of the backend processor - such as an electricity entity, insurance company, or Service Provider) compares the estimated location of the mobile phone 2 (after a calculation or directly) with respect to a stored fixed location of the meter 1. Such a fixed location of the meter 1 is stored in a datastore 6 to which the server is linked or has networked access to. This comparison identifies the meter 1, preferably without any additional identification like the typing of a serial number or analogue on the keyboard 7 of the mobile phone 2. Of course, tolerances have to be provided in the location acceptance. If the location data that compliments the received MMS meter data is granular enough (typically less than 50-100 meters) - then a reverse geocode to street address can be achieved with a lookup and logic to find the closest match in the datastore 6.

The type of location parameters is not important. For example, the location parameters are the latitude and longitude coordinates. Alternatively, distance and orientation or even accelerometer or magnetic heading generated paths with respect to a fixed point can be used or any other conventional method adapted to identify geographical or 3D locations in space.

According to a preferred embodiment, the server 5 further checks in a list of authorized emitters associated to the meter 1 whether the mobile phone 2 which has sent the MMS is an authorized one.

Then, the server 5 interprets the picture to obtain an alpha-numerical or meta-data digital value corresponding to the indication of the display D of the meter 1. Such an interpretation involves conventional image processing methods for: isolating the part of the picture corresponding to the display by recognition methods based on predetermined models of acceptable displays; and performing a segmentation via classical methods to identify the text in the picture and obtain a digital value of the displayed value of the meter.

If the interpretation step leads to a valid number, the server 5 could send back a valid acknowledgment to the mobile phone 2, for example a short text message using a Short Messaging System (SMS) or a GPRS packet confirmation to the application on the mobile phone 2.

If the interpretation step leads to an invalid number or if the mobile phone 2 is not authenticated, or if the location checking is negative, the server 5 could send an invalid acknowledgment to the mobile phone 2.

Once a valid number representing the current value of the display D of the meter 1 is stored in the datastore 6, the destination of this number (for example, for invoicing purposes) is conventional and application specific.

Figure 2 illustrates a second embodiment of the present invention applied to a monitoring of an odometer 11 of a vehicle (for example a car 10). In such an application, the number displayed by the meter 11 can be, for example used by an insurance company, to adapt periodically the amount of the insurance to be paid by the user to the distance made by the car.

For simplification, only the difference with respect to the first embodiment will be exposed. In particular, all the communication network elements (especially, access point(s) 3 and communication unit 4) have not been shown.

According to this embodiment, both the meter 11 to be monitored and the communicating device (the mobile phone 2) are mobile. Hence, there is potentially an additional problem for identifying the meter, and having solid association of that meter to the correct car to the correct customer.

According to a first alternative, the car 10 itself can be localized, for example, by a Global Positioning System GPS 12 or analogue or through a surveying system (anti robbery) using an in-built localization technique. Such a localization system is known and has not been shown. The server 5 receives the localization information of both the mobile phone 2 sending the picture and the localization system 12 of the car 10. It compares the two information datum and accepts the picture if the locations and meta-data extracted are consistent with known parameters.

According to a second alternative, the picture is accepted by the server 5 only if sent from one or few predetermined geographical areas. For example, the owner of the car has first communicated to the server (the insurance company) some fixed locations (his house 13, his office 14, etc.) to be stored in the datastore 6 of the server 5 in a list L with the corresponding coordinates (X, Y), or an elliptical formula for a geographical area, or analogue - as potential valid locations of the meter. Then, the process disclosed in connection with figure 1 is applied considering this(or these) locations as fixed locations of the meter 11.

An advantage of the present invention is that it does not require any modification to existing meters. In particular, the invention requires neither a communication element in the meter nor a connection of the meter to the communication network.

Another advantage of the present invention is that it automatically checks that the meter of which the picture is received is the probable correct one. Hence, the possibility of mistakes (or frauds) is reduced.

Another advantage of the present invention is that such a check is possible, even for a mobile meter, by fixing one or several locations of the meter in which the pictures are to be accepted.

Another advantage of the present invention is that the sender of the picture is easily identifiable by the mobile phone identification, what adds an authentication checking possibility to the location check.

Having thus described at least one illustrative embodiment of the invention, various alterations, modifications and improvements will readily occur to those skilled in the art. Such alterations, modifications, and improvements are intended to be within scope of the invention without departing from the wording of the claims. Accordingly, the foregoing description is by way of example only and is not intended to be limiting. The invention is limited only as defined in the following claims and the equivalents thereto.

Especially, the practical implementation of the invention by means of conventional computerized system is in the ability of one with an ordinary skill in the art.

Further, the invention has been more particularly disclosed in connection with utility meters. However, it applies to any meter or alphanumeric object which has to be monitored.

Furthermore, the invention has been more particularly disclosed in connection with a digital cellular network. However, it can be easily transposed to any wireless communication network adapted to transmit images taken by a mobile device, or transposed to any mobile transferable datastore element.

## Claims

1. A method for remote monitoring of a current value displayed by a display (D) of a meter (1, 11) comprising the step of:
taking a picture (P) of said display with a camera equipping a portable communication device (2), the method **characterized by** the steps of:
sending said picture through a communication network associated with the portable communication device to a server (5);
collecting and storing at least said picture in a remote computerized datastore (6) communicating with the server (5);
deducing from received or derived location data a geographical area of the portable communication device; and
checking whether a stored location of the meter is comprised within the deduced geographical area and identifying said portable communication device.

2. The method of claim 1, in which said picture (P) is sent through a Multimedia Messaging Service (MMS).

3. The method of claim 1, in which server (5) checks whether a stored location of the meter is comprised within the deduced geographical area.

4. The method of claim 1, in which said server (5) automatically detects in the picture (P) interpretable alphanumeric characters, indicators, or symbols that it converts into a digital value representing said current value.

5. The method of claim 1, in which data associated to said picture are collected and stored by said server (5) extracting data about the meter or object from said picture (P) and storing this or analyzing this utilizing datastore (6).

6. The method of claim 2, in which said picture (P) or said digital value is rejected if said stored location of the meter (1, 11) is not comprised within said deduced geographical area - and is accepted if said stored location is comprised in said area.

7. The method of claim 2, whereby the geographical datum received or deduced is utilized to formulate an associated
street or other customer identification datum which would be used to locate the closest match of existing customer records.

8. The method of claim 1, in which additional associated digital datum is analyzed by server (5) utilizing at least facial recognition techniques to validate the authenticity of the sender and datum.

9. The method of claim 1, in which an identification of the portable device (2) is sent to said server (5) which checks the presence of this identification in a list affected to said meter (1, 11) .

10. The method of claim 1, in which said location corresponds to directly or indirectly use the communication cell (3) in calculating said location - from which the portable device sends the picture.

11. The method of claim 1, in which said remote server (5) sends back to said portable device (2) an acknowledgment message of the reception of a picture (P) and/or of its acceptation and/or of its interpretability.

12. The method of claim 11, in which said acknowledgment message is sent through a Smart Message System (SMS).

13. The method of claim 11, in which said acknowledgment message is sent through a wireless digital packet or circuit switched network method.

14. The method of claim 1, in which the meter (11) is mobile, with at least one fixed location being stored in the datastore (6).

15. The method of claim 1, in which said meter (1) is a utility meter.

16. The method of claim 1, in which said meter (1) is an industrial or consumer meter or alphanumeric object.

17. The method of claim 1, in which said meter is an odometer (11) of a vehicle (10).

18. A system for remotely monitoring a current value indicated by a display (D) of a meter (1, 11) comprising:
a portable communication device (2) provided with a camera for taking a picture (P) of said display; and
a remote computerized server (5) for receiving the picture through the communication network associated to the portable communication device and storing said picture on a datastore (6), said server comprising means for:
storing an information of a geographical localization datum from where the portable device has sent the picture;
checking whether a stored location of the meter is comprised within a geographical area deduced from said localization datum; and
identifying said portable communication device.

19. The system of claim 18, further comprising means for performing the method according to any of claims 1 to 17.

## Patentansprüche

1. Ein Verfahren zur Fernüberwachung eines augenblicklichen bzw. gegenwärtigen Werts, der durch eine Anzeige (D) eines Messgeräts (1, 11) angezeigt wird, das die folgenden Schritte aufweist:
Anfertigen eines Bilds (P) der Anzeige mit einer Kamera, die mit einer tragbaren Kommunikationseinrichtung (2) bestückt ist, wobei das Verfahren durch die folgenden Schritte **gekennzeichnet** ist:
Senden des Bilds durch ein Kommunikationsnetzwerk, das mit der tragbaren Kommunikationseinrichtung verbunden ist, an einen Server (5);
Sammeln und Speichern des zumindest einen Bilds in einem entfernten, computergestützten Datenspeicher (6), der mit dem Server (5) kommuniziert;
Ableiten von empfangenen oder abgeleiteten Daten eines geographischen Bereichs der tragbaren Kommunikationseinrichtung; und
Überprüfen der Position der tragbaren Kommunikationseinrichtung und Identifizieren der tragbaren Kommunikationseinrichtung.

2. Verfahren gemäß Anspruch 1, in welchem das Bild (P) durch einen Multimedia Messaging Service (MMS) gesendet wird.

3. Verfahren gemäß Anspruch 1, in welchem der Server (5) überprüft, ob eine gespeicherte Position des Messgeräts innerhalb des abgeleiteten geographischen Bereichs liegt.

4. Verfahren gemäß Anspruch 1, in welchem der Server (5) automatisch in dem Bild (P) interpretierbare, alphanumerische Buchstaben, Indikatoren oder Symbole detektiert, die er in einen digitalen Wert umwandelt, der den gegenwärtigen Wert repräsentiert.

5. Verfahren gemäß Anspruch 1, in welchem Daten, die mit dem Bild assoziiert sind, durch den Server (5) gesammelt und gespeichert werden, der die Daten über das Messgerät oder den Gegenstand aus dem Bild (P) extrahiert und diese speichert oder diese unter Verwendung des Datenspeichers (6) analysiert.

6. Verfahren gemäß Anspruch 2, in dem das Bild (P) oder der digitale Wert abgelehnt wird, wenn die gespeicherte Position des Messgeräts (1, 11) nicht innerhalb des abgeleiteten geographischen Bereichs enthalten ist - und akzeptiert wird, wenn die gespeicherte Position in dem Bereich enthalten ist.

7. Verfahren gemäß Anspruch 2, wobei die empfangene oder abgeleitete geographische Referenz verwendet wird, um eine assoziierte Straße oder andere Kundenidentifikationsreferenz zu formulieren, die verwendet werden würde, um beste Entsprechung der bestehenden Kundenaufzeichnungen zu lokalisieren.

8. Verfahren gemäß Anspruch 1, in dem eine zusätzliche, assoziierte digitale Referenz durch den Server (5) analysiert wird, und zwar unter Verwendung von zumindest Gesichtserkennungstechniken, um die Authentizität des Senders oder der Referenz zu validieren.

9. Verfahren gemäß Anspruch 1, in dem eine Identifizierung der tragbaren Vorrichtung (2) an den Server (5) gesendet wird, welche das Vorhandensein dieser Identifizierung in einer Liste überprüft, die das Messgerät (1, 11) betrifft.

10. Verfahren gemäß Anspruch 1, in dem die entsprechende Position direkt oder indirekt mit der Verwendung der Kommunikationszelle (3) übereinstimmt, um die Position zu berechnen, von der die tragbare Einrichtung das Bild sendet.

11. Verfahren gemäß Anspruch 1, in dem der entfernte Server (5) zurück an die tragbare Einrichtung (2) eine Bestätigungsnachricht des Empfangs eines Bilds (P) und/oder seiner Annahme und/oder seiner Interpretierbarkeit sendet.

12. Verfahren gemäß Anspruch 11, in dem die Bestätigungsnachricht durch ein Smart Message System (SMS) gesendet wird.

13. Verfahren gemäß Anspruch 11, in dem die Bestätigungsnachricht durch ein drahtloses, digitales Paketverfahren oder ein leitungsvermitteltes Netzwerkverfahren gesendet wird.

14. Verfahren gemäß Anspruch 1, in dem das Messgerät (11) tragbar ist, wobei zumindest eine feststehende Position in dem Datenspeicher (6) gespeichert ist.

15. Verfahren gemäß Anspruch 1, in dem das Messgerät (1) ein Stromzähler bzw. Zähler ist.

16. Verfahren gemäß Anspruch 1, in dem das Messgerät (1) ein gewerbliches oder Verbrauchermessgerät oder ein alphanumerischer Gegenstand ist.

17. Verfahren gemäß Anspruch 1, in dem das Messgerät ein Kilometermesser (11) eines Fahrzeugs (10) ist.

18. Ein System zur Fernüberwachung eines gegenwärtigen Werts, der durch eine Anzeige (D) eines Messgeräts (1, 11) angezeigt wird, das Folgendes aufweist:
eine tragbare Kommunikationseinrichtung (2), die mit einer Kamera zum Anfertigen eines Bilds (P) der Anzeige vorgesehen ist; und
einen entfernten, computergestützten Server (5) zum Sammeln des Bilds durch das mit der tragbaren Kommunikationseinrichtung verbundene Kommunikationsnetzwerk und Speichern des Bilds in einem Datenspeicher (6), wobei der Server Mittel für Folgendes aufweist:
Speichern einer Information einer geographischen Positionsreferenz von der aus die tragbare Einrichtung das Bild gesendet hat;
Überprüfen, ob eine gespeicherte Position des Messgeräts innerhalb eines geographischen Bereichs enthalten ist, der sich von der Positionsreferenz ableitet; und
Identifizieren der tragbaren Kommunikationseinrichtung.

19. System gemäß Anspruch 18, das ferner Mittel zum Ausführen des Verfahrens gemäß irgendeinem der Ansprüche 1 bis 17 aufweist.

## Revendications

1. Procédé de surveillance à distance d'une valeur courante affichée par un afficheur (D) d'un dispositif de mesure (1, 11) comprenant l'étape suivante :
prendre une image (P) de l'afficheur avec un appareil de prise de vues équipant un dispositif de communication portable (2), le procédé étant **caractérisé par** les étapes suivantes :
envoyer l'image à un serveur (5) par l'intermédiaire d'un réseau de communication associé au dispositif de communication portable ;
recueillir et mémoriser au moins l'image dans une mémoire de données informatique (6) en communication avec le serveur (5) ;
déduire à partir de données de position obtenues ou déduites une zone géographique du dispositif de communication portable ; et
vérifier si une position mémorisée du dispositif de mesure est incluse dans la zone géographique déduite et identifier le dispositif de communication portable.

2. Procédé selon la revendication 1, dans lequel l'image (P) est envoyée par l'intermédiaire d'un service de messagerie multimédia (MMS).

3. Procédé selon la revendication 1, dans lequel le serveur (5) vérifie si une position mémorisée du dispositif de mesure est incluse dans la zone géographique déduite.

4. Procédé selon la revendication 1, dans lequel le serveur (5) détecte automatiquement dans l'image (P) des caractères alphanumériques, des indicateurs, ou des symboles interprétables qu'il convertit en une valeur numérique représentant la valeur courante.

5. Procédé selon la revendication 1, dans lequel des données associées à l'image sont recueillies et mémorisées par le serveur (5) en extrayant des données concernant le dispositif de mesure ou un objet à partir de l'image (P) et en mémorisant cela ou en analysant cela en utilisant la mémoire de données (6).

6. Procédé selon la revendication 2, dans lequel l'image (P) ou ladite valeur numérique est rejetée si la position mémorisée du dispositif de mesure (1, 11) n'est pas incluse dans la zone géographique déduite, et est acceptée si la position mémorisée est incluse dans la zone.

7. Procédé selon la revendication 2, par lequel les données géographiques reçues ou déduites sont utilisées pour formuler une rue ou une autre donnée d'identification de client associée qui serait utilisée pour localiser la concordance la plus proche avec des enregistrements de clients existants.

8. Procédé selon la revendication 1, dans lequel des données numériques associées supplémentaires sont analysées par le serveur (5) en utilisant au moins des techniques de reconnaissance de visage pour valider l'authenticité de l'émetteur et des données.

9. Procédé selon la revendication 1, dans lequel une identification du dispositif portable (2) est envoyée au serveur (5) qui vérifie la présence de cette identification dans une liste affectée au dispositif de mesure (1, 11).

10. Procédé selon la revendication 1, dans lequel la position correspond à utiliser directement ou indirectement la cellule de communication (3) dans le calcul de la position à partir de laquelle le dispositif portable envoie l'image.

11. Procédé selon la revendication 1, dans lequel le serveur distant (5) renvoie au dispositif portable (2) un message d'accusé de réception d'une image (P) et/ou de son acceptation et/ou de son interprétabilité.

12. Procédé selon la revendication 11, dans lequel le message d'accusé de réception est envoyé par l'intermédiaire d'un système de messages courts (SMS).

13. Procédé selon la revendication 11, dans lequel le message d'accusé de réception est envoyé par l'intermédiaire d'un paquet numérique sans fil ou d'un procédé de réseau à circuits commutés.

14. Procédé selon la revendication 1, dans lequel le dispositif de mesure (11) est mobile, au moins une position fixe étant mémorisée dans la mémoire de données (6).

15. Procédé selon la revendication 1, dans lequel le dispositif de mesure (1) est un dispositif de mesure d'usage général.

16. Procédé selon la revendication 1, dans lequel le dispositif de mesure (1) est un dispositif de mesure industriel ou grand public ou un objet alphanumérique.

17. Procédé selon la revendication 1, dans lequel le dispositif de mesure est un odomètre (11) d'un véhicule (10).

18. Système de surveillance à distance d'une valeur courante indiquée par un afficheur (D) d'un dispositif de mesure (1, 11) comprenant :
un dispositif de communication portable (2) muni d'un appareil de prise de vues pour prendre une image (P) de l'afficheur ; et
un serveur informatique distant (5) destiné à recevoir l'image par l'intermédiaire du réseau de communication associé au dispositif de communication portable et à mémoriser l'image dans une mémoire de données (6), le serveur comprenant :
des moyens pour mémoriser une information de donnée de localisation géographique à partir de laquelle le dispositif portable a envoyé l'image ;
des moyens de vérification du fait que la position mémorisée du dispositif de mesure est incluse dans une zone géographique déduite de la donnée de localisation ; et
des moyens d'identification du dispositif de communication portable.

19. Système selon la revendication 18, comprenant en outre des moyens pour effectuer le procédé selon l'une quelconque des revendications 1 à 17.
